# EUROPÄISCHE PATENTSCHRIFT

(11) **EP 1 465 936 B1**
(45) Veröffentlichungstag und Bekanntmachung des Hinweises auf die Patenterteilung: **27.07.2005**
(21) Anmeldenummer: 02793084.1
(22) Anmeldetag: 19.12.2002
(51) Int. Cl.: C08G 18/61, C08G 18/71, C08L 75/04

(54) **ALOXYSILANTERMINIERTE POLYMERE ENTHALTENDE VERNETZBARE POLYMERABMISCHUNGEN**
CROSS-LINKABLE POLYMER BLENDS CONTAINING ALKOXYSILANE-TERMINATED POLYMERS
MELANGES DE POLYMERES RETICULABLES COMPRENANT DES POLYMERES A TERMINAISON ALCOXYSILANE

(30) Priorität: 17.01.2002 DE 10201703
(43) Veröffentlichungstag der Anmeldung: 13.10.2004
(73) Patentinhaber: Consortium für elektrochemische Industrie GmbH, 81379 München (DE)
(72) Erfinder: SCHINDLER, Wolfram, 82008 Unterhaching (DE); SCHEIM, Uwe, 01640 Coswig (DE); PACHALY, Bernd, 84561 Mehring (DE)
(74) Vertreter: Fritz, Helmut, Dr.
(86) Internationale Anmeldenummer: PCT/EP2002/014567
(87) Internationale Veröffentlichungsnummer: WO 2003/059981

(56) Entgegenhaltungen:
- EP-A- 0 372 561
- EP-A- 0 931 800
- DE-A- 2 445 220

## Beschreibung

Die Erfindung betrifft einkomponentige Abmischungen mit alkoxysilanterminierten Polymeren, welche bei Raumtemperatur unter Einwirkung von Luftfeuchtigkeit zu niedermoduligen Massen aushärten.

Polymersysteme, die über reaktive Alkoxysilylgruppen verfügen, sind seit langem bekannt. In Gegenwart von Luftfeuchtigkeit sind diese alkoxysilanterminierten Polymere bereits bei Raumtem-peratur in der Lage, unter Abspaltung der Alkoxygruppen mit-einander zu kondensieren. Je nach Gehalt an Alkoxysilangruppen und deren Aufbau bilden sich dabei hauptsächlich langkettige Polymere (Thermoplaste), relativ weitmaschige dreidimensionale Netzwerke (Elastomere) oder aber hochvernetzte Systeme (Duroplaste).

Dabei kann es sich sowohl um alkoxysilanterminierte Polymere mit organischem Rückgrat handeln, z.B. um Polyurethane, Polyester, Polyether etc., beschrieben u.a. in EP-A-269 819, EP-A-931 800, WO 00/37533, US-A-3,971,751 und DE-A-198 49 817, als auch um Polymere, deren Rückgrat ganz oder zumindest zum Teil aus Organosiloxanen besteht, beschrieben u.a. in WO 96/34030 und US 5,254,657.

Entsprechend der zahllosen Möglichkeiten zur Gestaltung von derartigen silanterminierten Polymersystemen lassen sich sowohl die Eigenschaften der unvernetzten Polymere bzw. der polymerhaltigen Mischungen als auch die Eigenschaften der fertig vernetzten Massen (Härte, Elastizität, Zugfestigkeit, Reißdehnung und Hitzebeständigkeit) einstellen. Entsprechend vielfältig sind daher auch die Einsatzmöglichkeiten von derartigen silanterminierten Polymersystemen. So lassen sie sich beispielsweise zur Herstellung von Elastomeren, Dichtstoffen, Klebstoffen, elastischen Klebesystemen, harten und weichen Schäumen, den unterschiedlichsten Beschichtungssystemen und im medizinischen Bereich, z.B. für Abformmassen im Dentalbereich verwenden. Diese Produkte lassen sich in jeder Form applizieren, wie z.B. streichen, sprühen, gießen, pressen und spachteln.

Ein wesentlicher Nachteil besteht bei vielen Systemen in dem gegenläufigen Effekt zwischen Kettenlänge bzw. Molekulargewicht des zu verwendenden Polymers und den Verarbeitungseigenschaften hinsichtlich der Viskosität. Hohe Molekulargewichte sind nicht nur wegen der damit verbunden höheren mechanischen Festigkeit von Interesse sondern auch zur Herstellung von niedermoduligen Elastomeren, wie sie vor allem in Dichtstoffen gefordert sind, eine wichtige Voraussetzung. Können in derartigen Massen niederviskosere Polymere verwendet werden, so wird die Einstellung der Verarbeitungseigenschaften deutlich einfacher und flexibler.

Beispielsweise muss man eine möglichst hohe Viskosität eines Siliconpolymers verwenden, um die Eigenschaften des ausgehärteten Produkts hinsichtlich der Reißfestigkeit und der Elastizität zur Anwendung in Baudichtstoffen zu erreichen. Stand der Technik ist hier ein Polymer mit einer Viskosität von mindestens 80 Pas. Ein solches Polymer verursacht allerdings nachteilige Eigenschaften der Paste, wie Fadenzug, schlechte Glättbarkeit und hoher Anteil an Weichmachern. Ideal wäre zum Einstellen dieser Eigenschaften ein Polymer mit einer Viskosität von höchstens 20 Pas.

Noch ausgeprägter ist diese Tendenz bei der Verwendung von silanterminierten Polyurethanen. Hier ist die Herstellung von niedermoduligen Massen praktisch kaum mehr möglich, ohne in der Regel durch Weichmacherzusätze die mechanischen Eigenschaften deutlich zu verschlechtern.
Von großem Vorteil wären daher alkoxysilanterminierte Polymersysteme, die bei der Aushärtung nicht nur Vernetzen, sondern auch eine Kettenverlängerung der Polymere bewirken. Um die Vernetzungsdichten zu verringern werden in der Regel difunktionelle Silane in die Polymere eingebaut. Da die Reaktivität derartiger Massen meist deutlich geringer ist, muss der Gehalt an Katalysatoren (meist zinnhaltig) stark erhöht werden. Von besonderem Vorteil wäre es dabei, wenn man nicht nur auf difunktionelle Silane sondern auch auf monofunktionelle Silane, die ausschließlich eine Kettenverlängerung bewirken können, zurückgreifen könnte. Die bisher bekannten monofunktionellen Silanendgruppen auf Basis von Silanen mit Trimethylen-Spacern zwischen der organofunktionellen Einheit und dem Siliciumatom sind jedoch derart reaktionsträge, dass sie in der Regel als "tote" Kettenenden fungieren.

In DE-A-2543966 und DE-A-2445220 wird der Einsatz von Polymeren mit monofunktionellen Alkoxysilan-Endgruppen zur Herstellung von ein- und zweikomponentigen Polysiloxan-Polyurethan-Mischpolymeren beschrieben. Dabei werden isocyanat-terminierte Polyurethane mit Aminomethyl-monoalkoxysilanen (speziell Cyclohexylaminomethyl-dimethylethoxysilan) umgesetzt und die erhaltenen Polymere mit Vernetzerbausteinen und OHendterminerten Polysiloxanen zu Elastomeren vernetzt.

Nachteilig an diesem System ist unter anderen die Tatsache, dass die Umsetzung an die Verwendung von isocyanat-terminierten Präpolymeren gebunden ist. Die Herstellung derartige Polymere erfolgt üblicherweise durch eine Umsetzung von überschüssigen Diisocyanaten mit Polyolen. Durch den Einbau der Urethangruppen, aber vor allem durch die Vielzahl von Nebenreaktionen bei Verwendung eines Isocyanatüberschusses (Biurethbildung, Bildung Harnstoffbindungen durch Hydrolyse der NCO-Gruppen und Kondensation mit weiteren NCO-Gruppen) führt dies meist zu sehr viskosen Polymeren. Der Einbau der Aminosilane unter Bildung von Harnstoffgruppen verstärkt diesen negativen Effekt. Um dies zu kompensieren müssen diese Polymere meist mit geringeren Molekulargewichten synthetisiert werden. Damit wird aber das elastischen Verhalten der gehärteten Produkte negativ beeinflusst. Im Falle von di- und trifunktionellen Silanen erhält man meist nur sehr spröde, hochmodulige Massen. Der Einbau von Monoalkoxy-Endgruppen ist hier sicherlich vorteilhaft. Allerdings liegt der Modul dieser Massen immer sehr hoch und ist damit für Anwendungen im Baudichtstoffbereich problematisch.

Wie in EP-A-931800 dargestellt ist, ergibt der Einbau von Isocyanatosilanen eine deutliche Verbesserung der Eigenschaften der Dichtmassen im Vergleich zu entsprechenden Polymeren, die über Aminosilane hergestellt wurden. Monofunktionelle Silane konnten hier aber bisher nicht eingesetzt werden, da die bisher üblichen Silane mit Trimethylenspacer wie bereits oben erwähnt eine viel zu geringe Reaktivität aufweisen.

Gegenstand der Erfindung sind vernetzbare Polymerabmischungen, die alkoxysilanterminierte Polymere (A) mit Endgruppen der allgemeinen Formel (1)

-A-CH₂-SiR¹ ₐ(OR²)₃₋ₐ (1),

enthalten, wobei die Polymere (A) erhältlich sind durch Umsetzung von Präpolymeren (A1) die über reaktionsfähige HO-, HN(R³)- oder HS-Endgruppen verfügen, mit Isocyanatosilanen der allgemeinen Formel (2)

OCN-CH₂-SiR¹ ₐ(OR²)₃₋ₐ (2),

wobei
- **A**: eine zweibindige Bindegruppe ausgewählt aus -O-CO-NH-, -N(R³)-CO-NH-, -S-CO-NH-,
- **R**^{**1**}: einen gegebenenfalls halogensubstuierten Alkyl-, Cycloalkyl-, Alkenyl- oder Arylrest mit 1-10 Kohlenstoffatomen,
- **R**^{**2**}: einen Alkylrest mit 1-6 Kohlenstoffatomen oder einen ω-Oxyalkyl-alkylrest mit insgesamt 2-10 Kohlenstoffatomen,
- **R**^{**3**}: Wasserstoff, einen gegebenenfalls halogensubstuierten cyclischen, linearen oder verzweigten C₁ bis C₁₈-Alkyl- oder Alkenylrest oder einen C₆ bis C₁₈ Arylrest und
- **a**: eine ganze Zahl von 0 bis 2 bedeuten,
mit der Massgabe, dass der Anteil der Endgruppen der allgemeinen Formel (1), mit a = 2, bezogen auf alle Endgruppen der in der Mischung vorliegenden Polymeren, 5 % bis 100 % beträgt.

Die Polymere (A), welche über Alkoxysilyl-Endgruppen der allgemeinen Formel (1) verfügen, besitzen eine sehr hohe Reaktivität gegenüber Feuchtigkeit. So können auch Monoalkoxyendgruppen eingebaut werden und Polymerabmischungen hergestellt und verarbeitet werden, die auch mit wenig oder sogar ohne zugesetzten Schwermetall-Katalysatoren bei Raumtemperatur mit hinreichend kurzen Klebfreizeiten bzw. mit hinreichend hoher Härtungsgeschwindigkeit aushärten.

Es wurde gefunden, dass mit den bisher nicht untersuchten Isocyanatomethyl-alkoxysilane der allgemeinen Formel (2) mit Präpolymeren (A1), die über reaktionsfähige HO-, NH(R³)- oder SH-Endgruppen verfügen, die mit der Isocyanatgruppe zur Reaktion gebracht werden können, alkoxysilanterminierte Polymere (A) hergestellt werden können, die über sehr hohe Härtungsgeschwindigkeiten verfügen.
Ebenso überraschend war die Tatsache, dass auch die Isocyanatomethyl-monoalkoxysilane (**a** = 2) so reaktiv sind, dass auch damit feuchtigkeitshärtende Massen mit Hautbildungszeiten unter 15 min. zugänglich sind.

Ein weiterer Vorteil des Einsatzes von Isocyanatomethylalkoxysilanen der allgemeinen Formel (2) besteht auch darin, dass die einkomponentigen Polymerabmischungen auch mit relativ niedermolekularen und damit auch deutlich preisgünstigeren Präpolymeren (A1) als Polymerbausteine hergestellt werden können, wobei im Gegensatz zu den oben erwähnten Aminosilanen nicht nur isocyanatofunktionelle Systeme (NCO-terminierte Polyurethane) zugänglich sind, sondern eine Vielzahl weiterer Polymersysteme.

Die Polymere (A) enthaltenden Polymerabmischungen vernetzen zu niedermoduligen Elastomeren, die relativ große Kettenlängen bzw. Molekulargewichte aufweisen und dadurch höhere mechanische Festigkeitseigenschaften und höhere Elastizitäten erreichen.

Als Reste **R**^{**1**} werden Methyl-, Ethyl- oder Phenylgruppen bevorzugt, besonders bevorzug Methylgruppen. Bei den Resten **R**^{**2**} handelt es sich bevorzugt um Methyl- oder Ethylgruppen und als Reste **R**^{**3**} werden Wasserstoff, Alkylreste mit 1-4 Kohlenstoffatomen, Cyclohexyl- und Phenylreste bevorzugt.

Die Hauptketten der alkoxysilanterminierten Polymere (A) können verzweigt oder unverzweigt sein. Die mittleren Kettenlängen können beliebig entsprechend der jeweils gewünschten Eigenschaften, sowohl der unvernetzten Mischung als auch der ausgehärteten Masse angepaßt werden. Sie können aus unterschiedlichen Bausteinen aufgebaut sein. Üblicherweise sind dies Polysiloxane, Polysiloxan-Urea/Urethan-Copolymere, Polyurethane, Polyharnstoffe, Polyether, Polyester, Polyacrylate und -methacrylate, Polycarbonate, Polystyrole, Polyamide, Polyvinylester oder Polyolefine wie z.B. Polyethylen, Polybutadien, Ethylen-Olefincopolymere oder Styrol-Butadiencopolymere. Selbstverständlich können auch beliebige Mischungen oder Kombinationen aus Polymeren mit verschiedenen Hauptketten eingesetzt werden.

Ist das Präpolymer (A1) selbst aus mehreren Bausteinen (A11, A12 ...) zusammengesetzt, so ist es nicht unbedingt erforderlich, daß aus diesen Bausteinen (A11, A12 ...) zunächst das Präpolymer (A1) hergestellt wird, welches anschließend mit dem Silan der allgemeinen Formel (2) zum fertigen Polymer (A) umgesetzt wird. So ist hier auch eine Umkehrung der Reaktionsschritte möglich, indem einer oder mehrere Bausteine (A11, A12 ...) zunächst mit einem Silan der allgemeinen Formel (2) umgesetzt werden, und die dabei erhaltenen Verbindungen erst anschließend mit den verbleibenden Bausteinen (A11, A12 ...) zum fertigen Polymer (A) umgesetzt werden.

Beispiele für derartige Prepolymere (A1) bestehend aus Bausteinen A11, A12 sind HO-, HN(R³)-terminierte Polyurethane und Polyharnstoffe, welche sich aus Polyisocyanaten (Baustein A11) sowie Polyolen (Baustein A12) herstellen lassen.

Bevorzugte Bausteine (A11, A12 ...) zur Herstellung der Polymere (A) sind neben den Silanen der allgemeinen Formel (2) OH-terminierte Polyole, monomere Alkohole/Amine mit mindestens 2 OH/NH-Funktionen und/oder hydroxyalkyl- oder aminoalkylterminierte Polydiorganosiloxane sowie Di- oder Polyisocyanate.

Als Polyole für die Herstellung der Polymere (A) eignen sich besonders aromatische und aliphatische Polyesterpolyole und Polyetherpolyole, wie sie in der Literatur vielfach beschrieben sind. Prinzipiell können aber sämtliche polymeren, oligomeren oder auch monomeren Alkohole mit zwei oder mehr OH-Funktionen eingesetzt werden.

Als hydroxyalkyl- oder aminoalkylterminierte Polysiloxane werden bevorzugt Verbindungen der allgemeinen Formel (3)

Z-R⁶-[Si(R⁵)₂-O-]ₙ-Si(R⁵)₂-R⁶-Z (3)

eingesetzt, in der
- **R**^{**5**}: einen Kohlenwasserstoffrest mit 1 bis 12 Kohlenstoffatomen, bevorzugt Methylreste,
- **R**^{**6**}: eine verzweigte oder unverzweigte Kohlenwasserstoffkette mit 1-12 Kohlenstoffatomen, bevorzugt Trimethylen und
- **n**: eine Zahl von 1 bis 3000, bevorzugt eine Zahl von 10 bis 1000 bedeuten und
- **Z**: die Bedeutungen HO- oder HN(R³)- aufweist, wobei **R**^{**3**} die oben genannten Bedeutungen aufweisen kann.

Beispiele für gebräuchliche Diisocyanate sind Diisocyanatodiphenylmethan (MDI), sowohl in Form von rohem oder technischem MDI als auch in Form reiner 4,4'- bzw. 2,4'-Isomeren oder deren Mischungen, Tolylendiisocyanat in Form seiner verschiedenen Regioisomere, Diisocyanatonaphthalin, Isophorondiisocyanat oder auch Hexamethylendiisocyanat. Beispiele für Polyisocyanate sind polymeres Methylendiphenyl-4,4'-diisocyanat, Triphenylmethantriisocanat oder Biuret-triisocyanate.

Vorzugsweise beträgt der Anteil der Endgruppen der allgemeinen Formel (1), mit a gleich 2, bezogen auf alle Endgruppen der in der Polymermischung vorliegenden Polymeren, mindestens 25 %, bevorzugt mindestens 50 und insbesondere mindestens 75 %.

Neben den Polymeren (A), deren Endgruppen der allgemeinen Formel (1) entsprechen, können auch noch andere Polymere (X) in der Mischung vorhanden sein, die andere Endgruppen aufweisen. Beispiele für andere Polymere (X) sind im Falle der Polydiorganosiloxane bevorzugt trimethylsilylterminierte Polydimethylsiloxane oder bestimmte aromatenfreie Kohlenwasserstoffe. Im Falle der reinen organischen Polymersysteme sind dies Phthalsäureester, Adipinsäureester, Alkylsulfonsäureester oder ebenso aromatenfreie Kohlenwasserstoffe. Bevorzugt dienen diese Polymere als Weichmacher und zur Einstellung der Rheologie der Massen.

Vorzugsweise sind in Mischung mindestens 60 Gew.-%, besonders bevorzugt mindestens 80 Gew.-%, insbesondere mindestens 90 Gew.-% Polymere (A), bezogen auf die Summe der Polymeren (A) und (X) vorhanden.

Die Polymermischungen können weiterhin als Komponente (B) Katalysatoren enthalten. Unter Katalysatoren sind in diesem Zusammenhang Verbindungen zu verstehen, die in der Lage sind, die Aushärtung der Polymerabmischung zu katalysieren. Insbesondere handelt es sich dabei um organische Schwermetallverbindungen. Als Schwermetalle gelten in diesem Zusammenhang alle Metalle außer den Leichtmetallen, d.h. den Alkali- und Erdalkalimetallen sowie Aluminium und Scandium. Bevorzugt sind die Polymerabmischungen frei von zinnhaltigen Katalysatoren, insbesondere organischen Zinnverbindungen, wobei die Abwesenheit von titanhaltigen Katalysatoren ebenfalls bevorzugt ist. Besonders bevorzugt sind die Polymerabmischungen frei von jeglichen schwermetallhaltigen Katalysatoren.

Vorzugsweise können in den Polymerabmischungen als Komponente (B) auch organische Aminoverbindungen als basische Katalysatoren eingesetzt werden. Beispiele sind Aminosilane, wie Aminopropyltrimethoxysilan, Aminopropyltriethoxysilan, Aminomethyltrimethoxysilan, Aminomethyl-methyldimethoxysilan, N-(2-Aminoethyl)-aminopropyltrimethoxysilan und aliphatische Kohlenwasserstoffamine wie Triethylamin, Tributylamin, 1,4-Diazabicyclo[2,2,2]octan, N,N-Bis-(N,N-dimethyl-2-aminoethyl)-methylamin, N,N-Dimethylcyclohexylamin, N,N-Dimethylphenylamin und N-Ethylmorpholin.

Die Katalysatoren werden bevorzugt in Konzentrationen von 0,01 - 10 Gew.-%, insbesondere 0,05 bis 3 Gew.-% in der Polymerabmischung eingesetzt. Die verschiedenen Katalysatoren können sowohl in reiner Form als auch als Mischungen verschiedener Katalysatoren eingesetzt werden.

Als weitere Komponente (C) können die Polymerabmischungen sogenannte Vernetzersilane enthalten. Dies sind organofunktionelle Silane oder Kondensate daraus mit mindestens drei Alkoxygruppen, insbesondere Methoxy- und Ethoxygruppen pro Molekül. Beispiele für solche trifunktionellen Silane sind Methyltrimethoxysilan, Ethyltrimethoxysilan, Phenyltrimethoxysilan, Vinyltrimethoxysilan und Teilhydrolysate daraus. Die Vernetzersilane können in Mengen von 0,01 - 20 Gew.-%, bevorzugt 1,0 - 5,0 Gew.-%, in der fertigen Polymerabmischung vorliegen:

Die Polymerabmischungen können als weitere Komponenten an sich bekannte Hilfsstoffe, wie Füllstoffe, Wasserfänger, Reaktivverdünner, Haftvermittler, Thixotropiermittel, Lichtschutzmittel, Fungizide, Flammschutzmittel, Pigmente etc. enthalten, wie sie für den Einsatz in herkömmlichen alkoxyvernetzenden einkomponentigen Massen bekannt sind. Zur Erzeugung der jeweils gewünschten Eigenschaftsprofile sowohl der unvernetzten Polymerabmischungen als auch der ausgehärteten Massen sind derartige Zusätze in der Regel unverzichtbar.

Für die Polymerabmischungen existieren verschiedenste Anwendungen im Bereich der Kleb-, Dicht- und Fugendichtstoffe, Oberflächenbeschichtungen sowie zur Herstellung von Formteilen.

Dabei sind sie für unterschiedliche Untergründe wie z.B. mineralische Untergründe, Metalle, Kunststoffe, Glas und Keramik geeignet.

Die Polymerabmischungen können dabei sowohl in reiner Form als auch in Form von Lösungen oder Dispersionen zum Einsatz kommen.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, soweit nicht anders angegeben alle Mengen- und Prozentangaben auf das Gewicht bezogen, alle Drücke 0,10 MPa (abs.) und alle Temperaturen 20°C.

Die Hautbildungzeiten wurden mittels Prüfung der Oberfläche mit einem Metallspatel bestimmt. Als Hautbildungszeit gilt derjenige zeitliche Wert, bei dem die Berührung der Oberfläche entweder zu keinem haften des Spatels mehr führt oder bei leichter Haftung keine Fadenzug mehr beobachtet werden kann.

### Beispiel 1:

### Herstellung von Isocyanatomethyl-trimethoxysilan:

Methylcarbamatomethyl-trimethoxysilan wird in ein Quarz-Pyrolyserohr, das mit Quarzwolle gefüllt ist, im Argon-Gasstrom eingepumpt. Die Temperatur im Pyrolyserohr beträgt zwischen 420 und 470 °C. Das Rohprodukt wird am Ende der beheizten Strecke mit Hilfe eines Kühlers auskondensiert und gesammelt. Die gelblich - braune Flüssigkeit wird durch Destillation unter reduziertem Druck gereinigt. Über Kopf geht bei ca. 88-90 °C (82 mbar) das gewünschte Produkt in über 99 %-iger Reinheit über, während im Sumpf das nicht umgesetzte Carbamat reisoliert werden kann. Dieses wird der Pyrolyse direkt wieder zugeführt.

### Beispiel 2:

a) Herstellung von Isocyanatomethyl-dimethylmethoxysilan:
   Methylcarbamatomethyl-dimethylmethoxysilan wird analog Beispiel 1 durch Pyrolyse zum Isocyanat umgesetzt. Die gelblich - braune Flüssigkeit wird durch Destillation unter reduziertem Druck gereinigt. Über Kopf geht bei ca. 59 - 60 °C (20 mbar) das gewünschte Produkt in über 99 %-iger Reinheit über.
b) Herstellung von Isocyanatomethyl-dimethylethoxysilan:
   Methylcarbamatomethyl-dimethylethoxysilan wird analog Beispiel 1 und 2a) durch Pyrolyse zum Isocyanat umgesetzt. Die gelblich - braune Flüssigkeit wird durch Destillation unter reduziertem Druck gereinigt. Über Kopf geht bei ca. 66 - 69 °C (20 mbar) das gewünschte Produkt in über 99 %-iger Reinheit über.

### Beispiel 3 (nicht erfindungsgemäß):

500 g (11,1 mmol) α,ω-(3-Aminopropyl)-polydimethylsiloxan mit einem mittleren Molekulargewicht von 45 000 g/mol werden in einem beheizbaren mit Vakuumpumpe versehenen Laborplanetenmischer auf 80 °C erwärmt und 0,5 h im Vakuum ausgeheizt. Anschließend werden 3,9 g (22,2 mmol) Isocyanatomethyl-trimethoxysilan bei 80 °C zugegeben und weiter eine Stunde gerührt. Mittels IR-Spektroskopie wird die vollständige Umsetzung des Silans anhand der NCO-Bande verfolgt.
Das erhaltene silanterminierte Polymer wird unter Rührung auf 25 °C abgekühlt und mit 230,0 g eines trimethylsilylterminierten Polydimethylsiloxans mit einer Viskosität von 100 Pas, 20,0 g Methyltrimethoxysilane, 85,0 g einer hydrophilen pyrogenen Kieselsäure versetzt und innerhalb 0,5 h zu einer standfesten Paste verarbeitet. Letztlich werden 8,0 g 3-(2-Aminoethyl)-aminopropyltrimethoxysilan als weiterer Vernetzer und Katalysator 10 min. eingemischt.
Die Paste wird mit einer Schichtdicke von 2 mm auf einer Teflonplatte aufgerakelt und unter Einwirkung der Luftfeuchtigkeit zu einem Silicongummi vernetzt. Nach dem Ausbringen der Mischung beträgt die Klebfreizeit an der Luft etwa 5 min (23 °C, 50 % rh). Die Kennwerte dieses Produkts sind in Tabelle 1 zusammengestellt.

### Beispiel 4 (nicht erfindungsgemäß):

500 g (11,1 mmol) α,ω-(3-Aminopropyl)-polydimethylsiloxan mit einem mittleren Molekulargewicht von 45 000 g/mol werden in einem beheizbaren mit Vakuumpumpe versehenen Laborplanetenmischer auf 80 °C erwärmt und 0,5 h im Vakuum ausgeheizt. Anschließend werden 4,6 g (22,2 mmol) Isocyanatopropyl-trimethoxysilan (Silquest Y-5187 der Fa. Crompton) bei 80 °C zugegeben und weiter eine Stunde gerührt. Mittels IR-Spektroskopie wird die vollständige Umsetzung des Silans anhand der NCO-Bande verfolgt.
Das erhaltene silanterminierte Polymer wird unter Rührung auf 25 °C abgekühlt und mit 230,0 g eines trimethylsilylterminierten Polydimethylsiloxans mit einer Viskosität von 100 Pas, 20,0 g Methyltrimethoxysilane, 85,0 g einer hydrophilen pyrogenen Kieselsäure versetzt und innerhalb 0,5 h zu einer standfesten Paste verarbeitet. Letztlich werden 8,0 g 3-(2-Aminoethyl)-aminopropyltrimethoxysilan als weiterer Vernetzer 10 min. eingemischt.
Die Paste wird mit einer Schichtdicke von 2 mm auf einer Teflonplatte aufgerakelt und unter Einwirkung der Luftfeuchtigkeit zu einem Silicongummi vernetzt. Nach dem Ausbringen der Mischung beträgt die Klebfreizeit an der Luft etwa 2 h (23 °C, 50 % rh). Die Kennwerte dieses Produkts sind in Tabelle 1 zusammengestellt.

### Beispiel 5 (erfindungsgemäß):

500 g (11,1 mmol) α,ω-(3-Aminopropyl)-polydimethylsiloxan mit einem mittleren Molekulargewicht von 45 000 g/mol werden in einem beheizbaren mit Vakuumpumpe versehenen Laborplanetenmischer auf 80 °C erwärmt und 0,5 h im Vakuum ausgeheizt. Anschließend werden 3,6 g (22,2 mmol) Isocyanatomethyl-dimethylmethoxysilan bei 80 °C zugegeben und weiter eine Stunde gerührt. Mittles IR-Spektroskopie wird die vollständige Umsetzung des Silans anhand der NCO-Bande verfolgt.
Das erhaltene silanterminierte Polymer wird unter Rührung auf 25 °C abgekühlt und mit 230,0 g eines trimethylsilylterminierten Polydimethylsiloxans mit einer Viskosität von 100 Pas, 20,0 g Methyltrimethoxysilan, 85,0 g einer hydrophilen pyrogenen Kieselsäure versetzt und innerhalb 0,5 h zu einer standfesten Paste verarbeitet. Letztlich werden 20,0 g 3-(2-Aminoethyl)-aminopropyltrimethoxysilan als weiterer Vernetzer und Katalysator 10 min. eingemischt.
Die Paste wird mit einer Schichtdicke von 2 mm auf einer Teflonplatte aufgerakelt und unter Einwirkung der Luftfeuchtigkeit zu einem Silicongummi vernetzt. Nach dem Ausbringen der Mischung beträgt die Klebfreizeit an der Luft etwa 25 min (23 °C, 50 % rh). Die Kennwerte dieses Produkts sind in Tabelle 1 zusammengestellt.

### Beispiel 6 (nicht erfindungsgemäß):

400 g (50,0 mmol)eines Polypropylenglykols mit einem mittleren Molekulargewicht von 8000 g/mol werden vorgelegt, 1h bei 100 °C im Vakuum entwässert und mit 12,5 g (56 mmol) Isophorondiisocyanat bei 100 °C innerhalb von 60 min. polymerisiert. Das erhaltene OH-terminierte Polyurethanpräpolymer wird danach auf 60 °C abgekühlt und mit 19,5 g (110 mmol) Isocyanatomethyl-trimethoxysilan versetzt und 60 min gerührt, bis im IR-Spektrum keine Isocyanatbande mehr vorhanden ist. Man erhält ein klares, durchsichtiges Polymer mit einer Viskosität von 85 Pas. Das so hergestellte silanterminierte Polymer wird in einem Laborplanetenmischer bei ca. 25 °C mit 95 g Diisoundecylphthalat, 20,0 g Methyltrimethoxysilan und 430 g gefällter und getrockneter Kreide (vorher getrocknet, Wassergehalt < 50 ppm) versetzt und zu einer standfesten Paste verarbeitet. Letztlich werden 20,0 g 3-(2-Aminoethyl)-aminopropyltrimethoxysilan als weiterer Vernetzer und Katalysator 10 min. eingemischt. Nach dem Ausbringen der Mischung beträgt die Klebfreizeit an der Luft etwa 5 min (23 °C, 50 % rh). Die Kennwerte dieses Produkts sind in Tabelle 1 zusammengestellt.

### Beispiel 7 (erfindungsgemäß)

400 g (50,0 mmol)eines Polypropylenglykols mit einem mittleren Molekulargewicht von 8000 g/mol werden vorgelegt, 1h bei 100 °C im Vakuum entwässert und mit 12,5 g (56 mmol) Isophorondiisocyanat bei 100 °C innerhalb von 60 min. polymerisiert. Das erhaltene OH-terminierte Polyurethanprepolymer wird anschließend auf 60 °C abgekühlt und mit 17,7 g (110 mmol) Isocyanatomethyl-dimethylmethoxysilan versetzt und 60 min gerührt, bis im IR-Spektrum keine Isocyanatbande mehr zu sehen ist. Man erhält ein klares, durchsichtiges Polymer mit einer Viskosität von 80 Pas.
Das so hergestellte silanterminierte Polymer wird in einem Laborplanetenmischer bei ca. 25 °C mit 95 g Diisoundecylphthalat, 20,0 g Methyltrimethoxysilan und 430 g gefällter und getrockneter Kreide (vorher getrocknet, Wassergehalt < 50 ppm) versetzt und zu einer standfesten Paste verarbeitet. Letztlich werden 20,0 g 3-(2-Aminoethyl)-aminopropyltrimethoxysilan als weiterer Vernetzer und Katalysator 10 min. eingemischt. Nach dem Ausbringen der Mischung beträgt die Klebfreizeit an der Luft etwa 20 min (23 °C, 50 % rh). Die Kennwerte dieses Produkts sind in Tabelle 1 zusammengestellt.

### Beispiel 8 (nicht erfindungsgemäß)

400 g (50,0 mmol)eines Polypropylenglykols mit einem mittleren Molekulargewicht von 8000 g/mol werden vorgelegt, 1h bei 100 °C im Vakuum entwässert und mit 19,5 g (110 mmol) Isocyanatomethyl-trimethoxysilan versetzt und 60 min gerührt, bis im IR-Spektrum keine Isocyanatbande mehr vorhanden ist. Man erhält ein klares, durchsichtiges Polymer mit einer Viskosität von 8,5 Pas.
Das so hergestellte silanterminierte Polymer wird in einem Laborplanetenmischer bei ca. 25 °C mit 13,0 g Methyltrimethoxysilan und 195 g gefällter und getrockneter Kreide (vorher getrocknet, Wassergehalt < 50 ppm) versetzt und zu einer standfesten Paste verarbeitet. Letztlich werden 13,0 g 3-(2-Aminoethyl)-aminopropyltrimethoxysilan als weiterer Vernetzer und Katalysator 10 min. eingemischt. Nach dem Ausbringen der Mischung beträgt die Klebfreizeit an der Luft etwa 3 min (23 °C, 50 % rh). Die Kennwerte dieses Produkts sind in Tabelle 1 zusammengestellt.

### Beispiel 9 (erfindungsgemäß)

400 g (50,0 mmol)eines Polypropylenglykols mit einem mittleren Molekulargewicht von 8000 g/mol werden vorgelegt, 1h bei 100 °C im Vakuum entwässert und mit 15,9 g (110 mmol) Isocyanatomethyl-dimethylmethoxysilan versetzt und 60 min gerührt, bis im IR-Spektrum keine Isocyanatbande mehr vorhanden ist. Man erhält ein klares, durchsichtiges Polymer mit einer Viskosität von 85 Pas.
Das so hergestellte silanterminierte Polymer wird in einem Laborplanetenmischer bei ca. 25 °C mit 13,0 g Methyltrimethoxysilan und 195 g gefällter und getrockneter Kreide (vorher getrocknet, Wassergehalt < 50 ppm) versetzt und zu einer standfesten Paste verarbeitet. Letztlich werden 13,0 g 3-(2-Aminoethyl)-aminopropyltrimethoxysilan als weiterer Vernetzer und Katalysator 10 min. eingemischt. Nach dem Ausbringen der Mischung beträgt die Klebfreizeit an der Luft etwa 15 min (23 °C, 50 % rh). Die Kennwerte dieses Produkts sind in Tabelle 1 zusammengestellt.

### Beispiel 10 (erfindungsgemäß)

400 g (50,0 mmol)eines Polypropylenglykols mit einem mittleren Molekulargewicht von 8000 g/mol werden vorgelegt, 1h bei 100 °C im Vakuum entwässert und mit 17,3 g (110 mmol) Isocyanatomethyl-dimethylethoxysilan versetzt und 60 min gerührt, bis im IR-Spektrum keine Isocyanatbande mehr vorhanden ist. Man erhält ein klares, durchsichtiges Polymer mit einer Viskosität von 80 Pas.
Das so hergestellte silanterminierte Polymer wird in einem Laborplanetenmischer bei ca. 25 °C mit 195 g gefällter und getrockneter Kreide (vorher getrocknet, Wassergehalt < 50 ppm) versetzt und zu einer standfesten Paste verarbeitet. Letztlich werden 26,0 g 3-(2-Aminoethyl)-aminopropyltriethoxysilan als Vernetzer und Katalysator 10 min. eingemischt. Nach dem Ausbringen der Mischung beträgt die Klebfreizeit an der Luft etwa 10 min (23 °C, 50 % rh). Die Kennwerte diese Produkts sind in Tabelle 1 zusammengestellt.

**Tabelle 1:**

| **Eigenschaften der einkomponentigen Mischungen nach Beispiel 3 - 10.** | | | | | | | | |
|---|---|---|---|---|---|---|---|---|
| **Kennwert** | **B.3*** | **B.4 *** | **B.5** | **B.6 *** | **B.7** | **B.8*** | **B.9** | **B.10** |
| Hautbildung [min] | 5 | 120 | 25 | 5 | 20 | 3 | 15 | 10 |
| Zugfestigkeit [MPa], DIN 53504 | 1,49 | 1,35 | 1,82 | 1,45 | 2,05 | 1,60 | 2,17 | 2,34 |
| Reißdehnung [%], DIN 53504 | 396 | 422 | 635 | 220 | 475 | 120 | 465 | 498 |
| Spannung bei 100% Dehnung [MPa], DIN 53504 | 0,48 | 0,45 | 0,35 | 0,75 | 0,67 | 1,30 | 0,85 | 0,80 |
| Härte [Shore-A], DIN 53505 | 18 | 16 | 16 | 55 | 46 | 56 | 25 | 25 |

| | | | | | | | | |
|---|---|---|---|---|---|---|---|---|
| * nicht erfindungsgemäß | | | | | | | | |

## Patentansprüche

1. Vernetzbare Polymerabmischungen, die alkoxysilanterminierte Polymere (A) mit Endgruppen der allgemeinen Formel (1)
-A-CH₂-SiR¹ ₐ(OR²)₃₋ₐ (1)
enthalten, wobei die Polymere (A) erhältlich sind durch Umsetzung von Präpolymeren (A1) die über reaktionsfähige HO-, HN(R³)- oder HS-Endgruppen verfügen, mit Isocyanatosilanen der allgemeinen Formel (2)
OCN-CH₂-SiR¹ ₐ(OR²)₃₋ₐ (2),
wobei
**A** eine zweibindige Bindegruppe ausgewählt aus -O-CO-NH-, -N(R³)-CO-NH-, -S-CO-NH-,
**R**^{**1**} einen gegebenenfalls halogensubstuierten Alkyl-, Cycloalkyl-, Alkenyl- oder Arylrest mit 1-10 Kohlenstoffatomen,
**R**^{**2**} einen Alkylrest mit 1-6 Kohlenstoffatomen oder einen ω-Oxyalkyl-alkylrest mit insgesamt 2-10 Kohlenstoffatomen,
**R**^{**3**} Wasserstoff, einen gegebenenfalls halogensubstuierten cyclischen, linearen oder verzweigten C₁ bis C₁₈-Alkyl- oder Alkenylrest oder einen C₆ bis C₁₈ Arylrest und
**a** eine ganze Zahl von 0 bis 2 bedeuten,
mit der Massgabe, dass der Anteil der Endgruppen der allgemeinen Formel (1), mit a = 2, bezogen auf alle Endgruppen der in der Mischung vorliegenden Polymeren, 5 % bis 100 % beträgt.

2. Polymerabmischungen nach Anspruch 1, bei denen der Anteil der Endgruppen der allgemeinen Formel (1), mit a = 2, bezogen auf alle Endgruppen der in der Polymermischung vorliegenden Polymeren mindestens 50 % beträgt.

3. Polymerabmischungen nach Anspruch 1 oder 2, bei denen die Reste **R**^{**1**} Methyl-, Ethyl- oder Phenylgruppen sind.

4. Polymerabmischungen nach Anspruch 1 bis 3, bei denen die Reste **R**^{**2**} Methyl- oder Ethylgruppen sind.

5. Polymerabmischungen nach Anspruch 1 bis 4, welche organische Aminoverbindungen als basische Katalysatoren (B) enthalten.

6. Verwendung der Polymerabmischungen nach Anspruch 1 bis 5 als Kleb-, Dicht- oder Fugendichtstoffe, zur Oberflächenbeschichtung oder zur Herstellung von Formteilen.

## Claims

1. Crosslinkable polymer blends which comprise alkoxysilane-terminated polymers (A) having endgroups of the general formula (1)
-A-CH₂-SiR¹ ₐ(OR²)₃₋ₐ (1)
the polymers (A) being obtainable by reacting prepolymers (A1) containing reactive HO, HN(R³) or HS endgroups, with isocyanatosilanes of the general formula (2)
OCN-CH₂-SiR¹ ₐ(OR²)₃₋ₐ (2)
where
A is a divalent linking group selected from -O-CO-NH-, -N(R³)-CO-NH-, -S-CO-NH-,
R¹ is an optionally halogen-substituted alkyl, cycloalkyl, alkenyl or aryl radical having 1-10 carbon atoms,
R² is an alkyl radical having 1-6 carbon atoms or an ω-oxyalkylalkyl radical having a total of 2-10 carbon atoms,
R³ is hydrogen, an optionally halogen-substituted cyclic, linear or branched C₁ to C₁₈ alkyl or alkenyl radical or a C₆ to C₁₈ aryl radical, and
a is an integer from 0 to 2,
with the proviso that the fraction of the endgroups of the general formula (1) where a = 2, relative to all the endgroups of the polymers present in the mixture, is from 5% to 100%.

2. Polymer blends according to Claim 1, wherein the fraction of the endgroups of the general formula (1) where a = 2, relative to all the endgroups of the polymers present in the polymer mixture, is at least 50%.

3. Polymer blends according to Claim 1 or 2, wherein the radicals R¹ are methyl, ethyl or phenyl groups.

4. Polymer blends according to Claims 1 to 3, wherein the radicals R² are methyl or ethyl groups.

5. Polymer blends according to Claims 1 to 4, comprising organic amino compounds as basic catalysts (B).

6. Use of the polymer blends according to Claims 1 to 5 as adhesives or sealants, including joint sealants, for surface coating or for producing mouldings.

## Revendications

1. Mélanges de polymères réticulables, qui contiennent des polymères (A) terminés par alcoxysilane avec des groupements terminaux de formule générale (1)
-A-CH₂-SiR¹ ₐ(OR²)₃₋ₐ (1)
les polymères (A) pouvant être obtenus par transformation de prépolymères (A1) qui disposent de groupements terminaux HO, HN(R³) ou HS aptes à une réaction, avec des isocyanatosilanes de formule générale (2)
OCN-CH₂-SiR¹ ₐ(OR²)₃₋ₐ (2),
dans lesquelles
A est un groupe de liaison divalent, choisi parmi -O-CO-NH-, -N(R³)-CO-NH-, -S-CO-NH-,
R¹ signifie un radical alkyle, cycloalkyle, alcényle ou aryle, le cas échéant substitué par halogène, comprenant 1 à 10 atomes de carbone,
R² signifie un radical alkyle comprenant 1 à 6 atomes de carbone ou un radical ω-oxyalkyl-alkyle comprenant au total 2 à 10 atomes de carbone,
R³ signifie hydrogène, un radical alkyle en C₁ à C₁₈ ou alcényle, le cas échéant substitué par halogène, cyclique, linéaire ou ramifié ou un radical aryle en C₆ à C₁₈, et
a signifie un nombre entier de 0 à 2,
à condition que la proportion de groupements terminaux de formule générale (1) avec a = 2, par rapport à tous les groupements terminaux des polymères présents dans le mélange, soit de 5% à 100%.

2. Mélanges de polymères selon la revendication 1, dans lesquels la proportion de groupements terminaux de formule générale (1), avec a = 2, par rapport à tous les groupements terminaux des polymères présents dans le mélange de polymères est d'au moins 50%.

3. Mélanges de polymères selon la revendication 1 ou 2, dans lesquels les radicaux R¹ sont des groupements méthyle, éthyle ou phényle.

4. Mélanges de polymères selon les revendications 1 à 3, dans lesquels les radicaux R² sont des groupements méthyle ou éthyle.

5. Mélanges de polymères selon les revendications 1 à 4, qui contiennent des composés amino organiques comme catalyseurs basiques (B):

6. Utilisation des mélanges polymères selon les revendications 1 à 5 comme masses adhésives, d'étanchéité ou de rejointoiement, pour le revêtement de surface ou pour la préparation de pièces façonnées.
